(19) **Europäisches Patentamt**

**European Patent Office**

**Office européen des brevets**

(11) **EP 1 387 535 B1**

(12) **EUROPEAN PATENT SPECIFICATION**

(45) Date of publication and mention
of the grant of the patent:
**22.03.2006 Bulletin 2006/12**

(51) Int Cl.:
*H04L 12/56* (2006.01)        *H04Q 11/00* (2006.01)

(21) Application number: **03016643.3**

(22) Date of filing: **31.07.2003**

(54) **Minimum deflection routing in bufferless networks**

Minimale Ablenkungs-Wegelenkung in pufferlosen Netzen

Routage par déflexion minimale pour les réseaux sans mémoire tampon

(84) Designated Contracting States:
**AT BE BG CH CY CZ DE DK EE ES FI FR GB GR HU IE IT LI LU MC NL PT RO SE SI SK TR**

(30) Priority: **31.07.2002 US 208937**

(43) Date of publication of application:
**04.02.2004 Bulletin 2004/06**

(73) Proprietor: **ALCATEL**
**75008 Paris (FR)**

(72) Inventors:
• **Mneimneh, Saad**
**TX 75205 Dallas (US)**
• **Damm, Gerard**
**Ottawa,**
**Ontario K2A 1Z1 (CA)**
• **Verchere, Dominique**
**91650 Breuillet (FR)**
• **Quessette, Frank**
**78000 Versailles (FR)**

(74) Representative: **Rausch, Gabriele et al**
**Alcatel**
**Intellectual Property Department, Stuttgart**
**70430 Stuttgart (DE)**

(56) References cited:
**US-A- 6 111 673**

• **BORGONOVO F ET AL: "ROUTING IN THE BIDIRECTIONAL MANHATTAN NETWORK" , DATA COMMUNICATIONS SYSTEMS AND THEIR PERFORMANCE. PROCEEDINGS OF THE IFIP INTERNATIONAL CONFERENCE, NORTH-HOLLAND, AMSTERDAM, NL, PAGE(S) 181-189 XP000565988 * page 181, paragraph 1 - page 184, paragraph 3 * * page 185, paragraph 3 - page 186, paragraph 6 ***
• **CHING-FANG HSU ET AL: "On the deflection routing in qos supported optical burst-switched networks" , ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY: IEEE, US, VOL. VOL. 1 OF 5, PAGE(S) 2786-2790 XP010589988 ISBN: 0-7803-7400-2 * page 2786, paragraph 1 ***

**Description**

**BACKGROUND OF THE INVENTION**

Field of the Invention

The present invention relates in general to bufferless networks and, in particular, to a bufferless network (e.g., optical burst network) that has a series of nodes in each of which there is a routing algorithm that deflects a minimum number of packets to unfavorable nodes instead of to favorable nodes that are closer to their final destination nodes.

Description of Related Art

In bufferless networks such as optical burst networks, the intermediate storage of packets in a node (e.g., router) is not possible because the nodes do not have buffers or storage units. As such, each node needs to execute a routing strategy wherein every time a node receives a set of packets in one time slot then that node must forward those packets to adjacent nodes at the next time slot. If this does not happen, then the node must drop one or more packets because it cannot store packets in a buffer or storage unit. Ideally, a packet is forwarded along a desired direction that is on a favorable link toward its final destination node. However, when two or more packets want to use the same link, the node cannot forward all of those packets directly towards their final destination node. Such packets are therefore deflected and routed on an unfavorable link to an unfavorable node away from their final destination node. A traditional routing strategy based on the augmenting path algorithm attempts to solve this deflection problem by trying to minimize the number of packets that are deflected and routed to unfavorable nodes away from their final destination node. However, traditional routing strategies based on the augmenting path algorithm are very complex and difficult to implement as can be appreciated by those skilled in the art. Accordingly, there is a need for a bufferless network that executes a minimum deflection routing strategy which is not as complex and is easier to implement than the traditional algorithms.
The document XP 000565988 describes a process of routing in a bidirectional Manhattan network, which is a regular grid-topology network with simple structured nodes that allow fast packet switching without buffering needs.
US-patent 6,111,673 discloses an optical signaling header technique which is applicable to optical networks, wherein packet routing information is embedded in the same channel or wavelength as the data payload so that both the header and data payload propagate through network elements with the same path and the associated delays.
The document XP 10589988 presents an investigation of the performance of deflection routing in prioritized JET-based optical burst-switched networks. A queuing model is proposed to approximate loss probability.

**BRIEF DESCRIPTION OF THE INVENTION**

The present invention includes a bufferless network (e.g., optical burst network) and a method for executing a routing strategy that deflects a minimum number of packets in the bufferless network. The bufferless network includes a group of nodes (e.g., routers) that are connected to one another by a set of links (e.g., paths). Each node executes the routing strategy that deflects a minimum number of packets to unfavorable nodes instead of to favorable nodes that are closer to their final destination nodes. Three different embodiments of the routing strategy are described herein.

**BRIEF DESCRIPTION OF THE DRAWINGS**

A more complete understanding of the present invention may be obtained by reference to the following detailed description when taken in conjunction with the accompanying drawings wherein:

FIGURE 1 is a diagram of a bufferless network incorporating a minimum deflection routing algorithm of the present invention;
FIGURE 2 is a flowchart illustrating the steps of a preferred method for executing a first embodiment of the minimum deflection routing algorithm shown in FIGURE 1;
FIGURES 3A-3E are graphs and tables showing five different examples of the execution of the method shown in FIGURE 2;
FIGURE 4 is a flowchart illustrating the steps of a preferred method for executing a second embodiment of the minimum deflection routing algorithm shown in FIGURE 1;
FIGURES 5A-5E are graphs and tables showing five different examples of the execution of the method shown in FIGURE 4;
FIGURE 6 is a flowchart illustrating the steps of a preferred method for executing a third embodiment of the minimum deflection routing algorithm shown in FIGURE 1; and

FIGURES 7A-7G are graphs and tables showing an example of the execution of the method shown in FIGURE 6.

**DETAILED DESCRIPTION OF THE DRAWINGS**

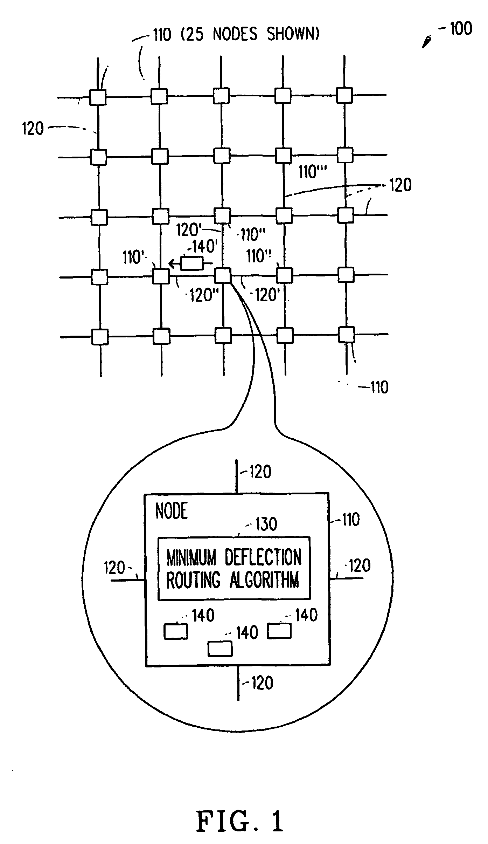

Referring to FIGURES 1-7, there are illustrated a bufferless network 100 (shown as an optical network) and preferred methods 200, 400 and 600 for executing a routing strategy in accordance with the present invention. Although the present invention is described below as being used in an optical network that has a grid-like topology, it should be understood that the present invention can be used in any type of bufferless network (e.g., radio network, wired network) that has any type of topology so long as a packet has at most two favorable links to two favorable nodes on which it would like to travel to get to its destination node. Accordingly, the bufferless network 100 and preferred methods 200, 400 and 600 should not be construed in such a limited manner.

As shown in FIGURE 1, the bufferless network 100 includes a group of nodes 110 (e.g., routers) and a set of links 120 (e.g., paths) that connect together the nodes 110. Each node 110 executes a routing strategy 130 also described as a minimum deflection routing algorithm that deflects a minimum number of packets 140 (only one deflected packet 140' is shown) to unfavorable nodes 110' instead of favorable nodes 110'' that are closer to their destination nodes 110'''.

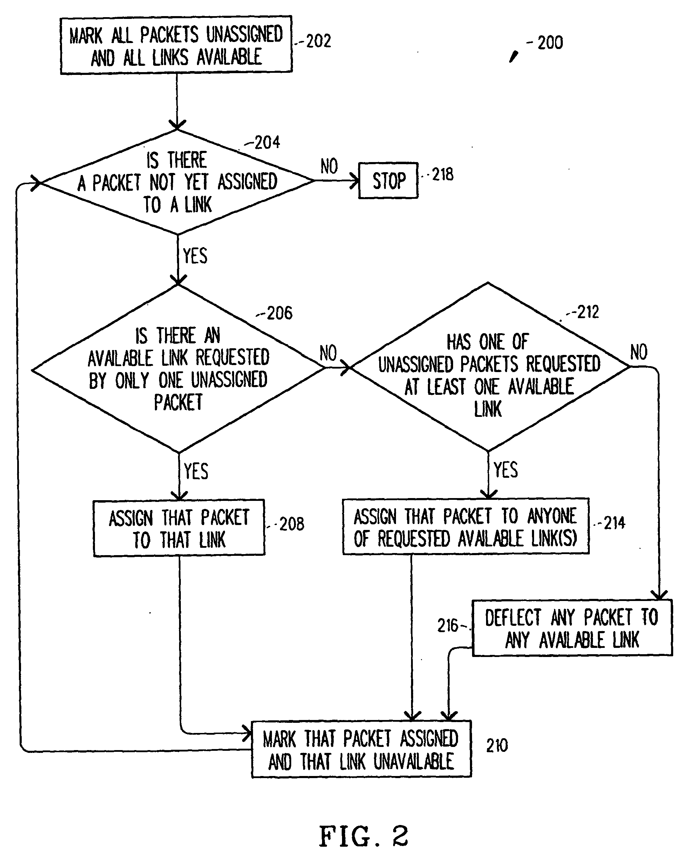

In particular, the bufferless network 100 can be a bufferless optical network such as a synchronous optical burst network (OBN) which has nodes 110 that do not have optical memories or buffers to store packets 140. The routing strategy 130 has a couple of requirements that need to be followed in order to deflect a minimum number of packets 140. First, the routing strategy 130 is a distributed algorithm and is applied independently at each time slot in each node 110. Secondly, each packet 140 has at most two favorable links 120 leading to two favorable nodes 110'' on which they would like to travel through to get to their final destination node 110'''. Three different embodiments of the routing strategy 130 are described below with respect to methods 200, 400 and 600 shown in FIGURES 2-7 after a brief description about bufferless networks 100 and how the routing strategy 130 can be modeled using a bipartite graph.

Again, in the bufferless network 100, the intermediate storage of packets 140 is not possible. Therefore, each node 110 in the bufferless network 100 receives a set of packets 140 requesting at most two different directions and executes a routing strategy by which it forwards all the packets 140 at the same time. Ideally, each packet 140 is forwarded along a desired direction that is on a favorable link 120 leading toward its final destination node 110'''. However, due to link 120 conflicts at the node 110, some packets 140 (only one deflected packet 140' is shown) cannot be forwarded on a favorable link 120 (two favorable links 120' are shown) directly towards their final destination node 110'''. Such packets 140 are therefore deflected and routed on an unfavorable link 120 (only one unfavorable link 120 '' is shown) to an unfavorable node 110' instead of to favorable nodes 110 '' that are closer to their destination nodes 110'''.

The interest in a minimum deflection routing emanates from the need to deliver packets 140 as soon as possible to their final destination node 110'''. It is expected that by deflecting the minimum number of packets 140 at each node 110 in the bufferless network 100 there will be, as a result, a reduction of the average time by which a packet 140 is delivered to its final destination node 110'''. On the other hand, there is also an interest in linear complexity which emanates from the fact that the routing strategy 130 has to be performed efficiently and as fast as possible.

The minimum deflection routing algorithm is a routing strategy 130 by which every node 110 deflects the minimum possible number of packets 140. The problem of minimum deflection routing can be modeled at each node 110 as an assignment problem on a bipartite graph. In a bipartite graph BG = ($V_c$, $V_d$, E) where $V_c$ represents a set of packets 140 (also known as customers), $V_d$ represents a set of directions (also known as links 120), and E represents a set of requests, a routing is an assignment of packets 140 to links 120 (directions). A minimum deflection routing algorithm 130 is therefore an assignment in which the number of packets 140 that are deflected is minimized.

From hereinafter, the discussion associated with the minimum deflection routing strategy 130 is represented in the context of a bipartite graph. And, vertex in $V_c$ of the bipartite graph has a degree of at most 2. Such a bipartite graph is represented as $BG_2$.

Definition 1: A bipartite graph BG = ($V_c$, $V_d$, E) is called a $BG_2$ graph if for every u ∈ $V_c$, deg (u) ≤ 2.

In other terms, each packet 140 can request at most two links 120. This restriction on packets 140 emanates from the fact that in a 2-dimensional square grid network where the number of favorable links 120 from any node 110 to a final destination node 110''' is at most 2. For instance, FIGURE 1 illustrates a backbone of the bufferless network 100 in which there are at most two favorable links 120 (shown as links 120') between any two nodes 110 (shown as the exploded nodes 110 and node 110'''). Nevertheless, if one looked at practical network topologies (e.g., US backbone network), they would find that this assumption is not a very restrictive one.

<u>First Embodiment</u>

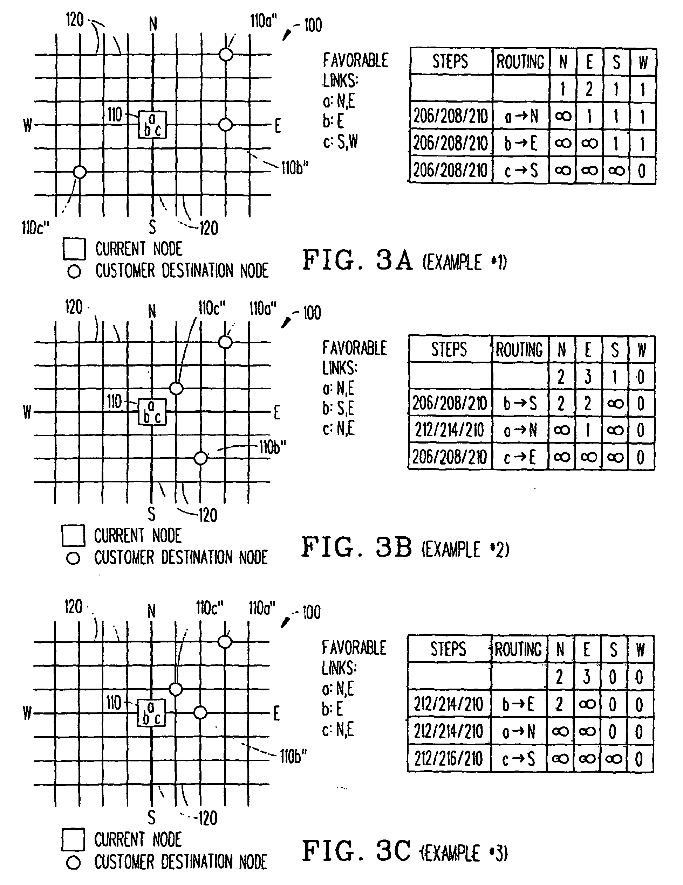

Referring to FIGURE 2, there is a flowchart illustrating the steps of a preferred method 200 for executing the first embodiment of the minimum deflection routing algorithm 130a. To help better understand the different steps of the first embodiment of the minimum deflection routing algorithm 130a reference is made to five different examples in FIGURES 3A-3E.

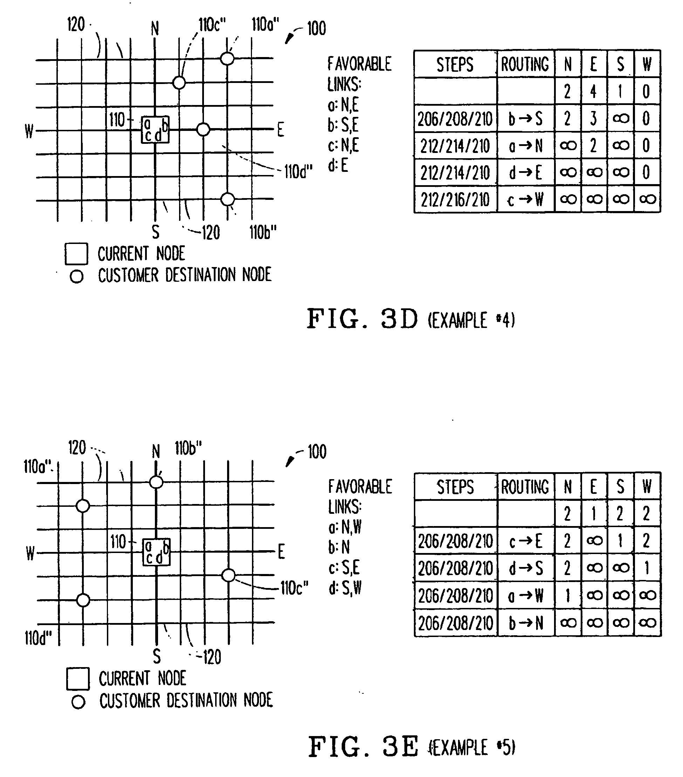

Beginning at step 202, the minimum deflection routing algorithm 130a marks all packets 140 as unassigned packets 140 and all links 120 are marked as available links 120. In FIGURES 3A-3E, the packets 140 (shown as packets "a", "b", "c" and "d") are located within node 110 (shown as current node 110) and want to get to their destination nodes 110 " (shown as destination nodes 110a" , 110b", 110c'' and 110d"). The location of the destination nodes 110a" , 110b", 110c" and 110d" indicate which links 120 are favorable links 120 for the respective packets 140a, 140b, 140c and 140d. In example #4 shown in FIGURE 3D, the favorable links 120 (shown as directions N, S, E and W) for each packet 140a, 140b, 140c and 140d are as follows:

- packet 140a: N and E.
- packet 140b: S and E.
- packet 140c: N and E.
- packet 140d: E.

At step 204, the minimum deflection routing algorithm 130a determines if there is a packet 140 not yet assigned to a link 120. If the answer to step 204 is no, then at step 218 the minimum deflection routing algorithm 130a is stopped.

Referring to example #4 in FIGURE 3D, for the first time through step 204 none of the packets 140a, 140b, 140c or 140d are assigned to a link 120 (goto step 206). For the second time through step 204, packets 140a, 140c and 140d are not assigned to a link 120 (goto step 206). For the third time through step 204, packets 140c and 140d are not assigned to a link 120 (goto step 206). For the fourth time through step 204, packet 140c is not assigned to a link 120 (goto step 206). For the fifth time through step 204, all the packets 140a, 140b, 140c and 140d have all been assigned so the minimum deflection routing algorithm 130a stops.

If the answer to step 204 is yes, then at step 206 the minimum deflection routing algorithm 130a determines if there is an available link 120 that is requested by only one unassigned packets 140.

Referring to example #4 in FIGURE 3D, for the first time through step 206 there is an available link 120 (shown as direction S) that is requested by one unassigned packet 140b (goto step 208). For the second, third and fourth times through step 206 there is not an available link 120 that is requested by only one unassigned packet 140a, 140c or 140d and as such the method 200 proceeds to step 212.

If the answer to step 206 is yes, then at step 208 the minimum deflection routing algorithm 130a assigns that unassigned packet 140 to that available link 120. Then at step 210, the minimum deflection routing algorithm 130a marks that packet 140 as assigned and marks that link 120 as unavailable. The minimum deflection routing algorithm 130a then returns to the first determining step 204.

Referring to example #4 in FIGURE 3D, for the first time through step 208, the packet 140b is assigned to the only one available link 120 (shown as direction S) and that link 120 is marked as unavailable. In this example, step 208 is performed only once for packet 140b.

If the answer to step 206 is no, then at step 212 the minimum deflection routing algorithm 130a determines if an unassigned packet 140 has a request for one or more available links 120.

Referring to example #4 in FIGURE 3D, for the first time through step 212, packet 140a has two requests for available links 120 (directions N and E)(goto step 214). For the second time through step 212, packet 140d has a request for an available link 120 (directions E) (goto step 214).

If the answer to step 212 is yes, then at step 214 the minimum deflection routing algorithm 130a arbitrarily assigns that packet 140 to anyone of available links 120. Then at step 210, the minimum deflection routing algorithm 130a marks that packet 140 as assigned and marks that link 120 as unavailable. The minimum deflection routing algorithm 130a then returns to the first determining step 204.

Referring to example #4 in FIGURE 3D, for the first time through step 214, the packet 140a is arbitrarily assigned to one of the available links 120 (shown as directions N and E) and that link 120 (direction N) is marked as unavailable (goto step 204). For the second time through step 214, the packet 140d is arbitrarily assigned to the available link 120 (shown as direction E) and that link 120 (direction E) is marked as unavailable (goto step 204). If the answer to step 212 is no, then at step 216 the minimum deflection routing algorithm 130a deflects and assigns that packet 140 to any link 120 that is currently available even though that link 120 was not requested by that packet 140. Then at step 210, the minimum deflection routing algorithm 130a marks that packet 140 as assigned and marks that link 120 as unavailable. The minimum deflection routing algorithm 130a then returns to the first determining step 204.

Referring to example #4 in FIGURE 3D, for the first time through step 216, the packet 140c which had requested links 120 (directions N and E) that have been assigned to other packets 140a and 140d has been deflected to an available link 120 (direction W) and that link 120 (direction W) is marked as unavailable (goto step 204).

The remaining examples #1-3 and #5 shown in FIGURES 3A-3C and 3E are provided to help one better understand the different steps of the first embodiment of the minimum deflection routing algorithm 130a. It should be understood that there are many different ways one could implement the first embodiment of the minimum deflection routing algorithm 130a to obtain the same results.

Below is another way to describe the first embodiment of the minimum deflection routing algorithm 130a using terminology associated with a non-weighted bipartite graph. Again, BG = $(V_c, V_d, E)$ is the bipartite graph representing the packets 140 and directions 120. The minimum deflection routing algorithm 130a that computes a routing R can be represented as:

$$R = \phi$$

while $E \neq \phi$

```
if  ∃ (u,v) ∈ E with deg(v) = 1
      R=R ∪ {(u,v)}
else
      pick any (u,v) ∈ E


      R=R ∪ {(u,v)}
```

remove all edges in E that are adjacent to vertices u or v, where u is a packet and v is a direction.

In simple terms, the minimum deflection routing algorithm 130a starts with the BG graph and updates it, by removing edges, after each assignment it makes until no more assignments are possible. Whenever there is a link (direction) that is requested only once in the updated BG, it assigns to this link its only packet. Otherwise, it makes an arbitrary assignment. It should be noted that this representation of the minimum deflection routing algorithm 130a does not mention the actual deflection of packets, but the packets that can not be assigned to a favorable link are deflected the same as steps 216 and 210 in method 200.

As an example, consider the 2-dimensional square grid bufferless network 100 shown in FIGURE 3D. In this example, there are four packets a, b, c, and d; and four directions N, S, E, and W. Packets a and c have both two desired directions N and E. Packet d has only one desired direction E. Packet b has two desired directions S and E.

The minimum deflection routing algorithm 130a proceeds as follows for example #4 shown in FIGURE 3D. Since the direction S is requested only once, it will be assigned its packet b. The minimum deflection routing algorithm 130a will remove edges (b, S) and (b, E). We are left with three packets a, c, and d; and directions N, W and E. Since there are no more directions that are requested only once, the minimum deflection routing algorithm 130a will pick an arbitrary assignment. Let's assume that it assigns packet a to direction N and removes edges (a, N), (a, E), and (c, N). Finally, one is left with two packets c and d, and directions E and W. Again, the minimum deflection routing algorithm 130a will pick an arbitrary assignment, say it assigns packet d to direction E and removes edges (d, E) and (c, E). There are no more edges in the graph and hence the minimum deflection routing algorithm 130a stops. There is only one deflected packet, namely, packet c. In a bidirectional network, it is assumed that the number of packets that arrive at a node is at most the number of available directions. Therefore, there is always enough directions to forward all packets. In this example, packet c will be deflected to direction W.

Below is a proof of the correctness of the minimum deflection routing algorithm 130a. The routing strategy 130a as presented above computes a minimum deflection routing if BG is a $BG_2$ graph. The proof relies on the fact that the minimum reflection routing algorithm 130a computes a maximum cardinality matching in a $BG_2$ graph. Start with a simple lemma.

Lemma 1A: If a graph G contains a vertex v with degree 1, then there exists a maximum cardinality matching that contains the edge (u, v) that connects v in G.

Proof: Consider a maximum cardinality matching M that does not contain (u, v). Unmatching u and adding (u, v) to M will result in a maximum cardinality matching M' that contains (u, v).

Note that Lemma 1A justifies the steps 206 and 208 of the minimum deflection routing algorithm 130a where a direction with degree 1 is assigned first.

Lemma 2A: Given a $BG_2 = (V_c, V_d, E)$ where every node $v \in V_d$ has deg (v) $\geq$ 2, let (u, v) be any edge in E. Then there exists a maximum cardinality matching M that contains (u, v).

Proof: Let M be a maximum cardinality matching that does not contain (u, v). If either u or v is not matched in M, then we can unmatch either u or v in M and add (u, v) to M without having to unmatch any additional vertex. Thus, one can obtain a maximum cardinality matching M' that contains (u, v). So assume that both u and v are matched in M. Let u be matched to $v_0$ and v be matched to $u_0$. Consider an alternating path starting with $u_0$, v, u, $v_0$,.... The alternating path will remove $(u_0, v)$, add (u, v), remove $(u, v_0)$, etc... Since each vertex in $V_d$ has degree at least 2, whenever one reaches a vertex in $V_d$ they can find an edge that takes them back to $V_c$. Note that one always reaches a vertex in $V_c$ from an edge that is not in the matching M. So whenever one reaches a vertex in $V_c$ that is matched in M, they can continue on the path along the edge that matches that vertex in M to a new vertex in $V_d$. Therefore, one can continue the alternating path by adding and removing edges as described above until they either reach a node in $V_c$ that is not matched in M or reached node $u_0$. In both cases, one obtains a matching M' that contains (u, v) and has the same cardinality as M.

Using Lemma 1A and Lemma 2A, one can prove the following result.

Theorem 1A: minimum deflection routing algorithm 130a computes a minimum deflection routing in a $BG_2$ graph.

Proof: It is equivalent to prove that minimum deflection routing algorithm 130a computes a maximum cardinality matching in a $BG_2$ graph. From Lemma 1A and Lemma 2A, the minimum deflection routing algorithm 130a always picks an edge that can be part of the maximum cardinality matching in the updated $BG_2$ graph. Therefore, the minimum deflection routing algorithm 130a computes a maximum cardinality matching.

It has been proved that the minimum deflection routing algorithm 130a computes a minimum deflection routing in a $BG_2$ graph. However, one can further quantify that minimum as stated in the following lemma. Let $d_R$ be the number of deflections with a routing R. Let

$$\mathtt{dmin\ =\ min\ R\ dR}$$

be the minimum deflection possible with any routing R.

Lemma 3A: For a $BG_2$ graph with k connected components $G_1 = (V_{c1}, V_{d1}, E_1), ..., G_k = (V_{ck}, V_{dk}, E_k)$,

$$d_{\min} = \min_R d_R$$

where $x^+$ is defined as max (0, x).

$$d_{\min} = \sum_{i=1}^{k} \left( \left| V_{c_i} \right| - \left| V_{d_i} \right| \right)^+$$

Proof: Consider one connected component $G_i$. It can be proved that the size of a vertex cover for Gi is at least min ($|V_{ci}|$, $|V_{di}|$). This implies that the minimum size vertex cover is at least min ($|V_{ci}|$, $|V_{di}|$). By Konig's theorem, the cardinality of the maximum matching is equal to the size of the minimum vertex cover in a bipartite graph. Since, the minimum deflection routing algorithm 130a computes a minimum deflection routing, it computes a maximum cardinality matching in Gi which will be at least min ($|V_{ci}|$, $|V_{di}|$). But the maximum cardinality matching in $G_i$ cannot be greater than min ($|V_{ci}|$, $|V_{di}|$, so it is exactly equal to min ($|V_{ci}|$, $|V_{di}|$). Therefore the number of deflections in Gi is equal to $(|V_{ci}| - |V_{di}|)^+$. Summing over all the connected components one gets the result above. To prove that a vertex cover for $G_i$ has size at least min ($|V_{ci}|$, $|V_{di}|$). Recall that $G_i$ is a connected $BG_2$ graph. Consider a vertex cover C for $G_i$. Let $S_1$ be the set of all vertices in $V_{di}$ that are in C. If $S_1$ is empty, then C must contain all vertices in $V_{ci}$. So assume that $S_1$ is not empty. Let $S_2$ be the set of nodes in $V_{ci}$ that are connected to two vertices in $V_{di}$ such that one of them is in $S_1$ and the other is not in $S_1$. If $S_2$ is empty, then $|V_{di}| = [S_1]$ and one is done; because otherwise, $G_i$ will be disconnected. Let $S_3$ be the set of vertices in $V_{di}$ that are not in $S_1$ but connected to a vertex in $S_2$. Note that $|S_2| = |S_3|$. Since none of the vertices of $S_3$ is in C by definition of $S_1$, all vertices in $S_2$ must be in C. Let $S_4$ be the set of vertices in $V_{di}$ that are not in $S_1$ nor in $S_3$. Without loss of generality, assume $S_4$ is not empty. One knows that vertices in $S_4$ are not in C by definition of $S_1$. Since Gi is connected, the only way for each vertex v in $S_4$ to be connected to the rest of the graph is by an edge going to a vertex u in $V_{ci}$ that is in C and that is in turn connected to $S_3$. Let the set of these u vertices be $S_5$. Since each vertex in $V_{ci}$ has degree at most 2, $|S_5| = |S_4|$. As a result $|C| \geq |S_1| + |S_2| + |S_5| = |S_1| + |S_3| + |S_4| = |V_{di}|$.

It should be understood that the minimum deflection routing algorithm 130a has a linear time complexity in the RAM model as stated in the following theorem:

Theorem 2A: The time complexity of Algorithm I on a BG2 graph is $O(|V_c|)$ in the RAM model.

Proof: In each step of the minimum deflection routing algorithm 130a, at least one edge is removed from the graph. Looking for directions with degree 1 can be done is a constant time by maintaining a list of directions that have degree 1 and updating that list whenever some edges are removed. If each edge keeps a pointer to its vertex in $V_d$, the work spent on updating the list in each step is proportional to the number of edges removed during that step. Since the number of edges is at most $2|V_c|$, the minimum deflection routing algorithm 130a has a linear time complexity in the number of packets.

Second Embodiment

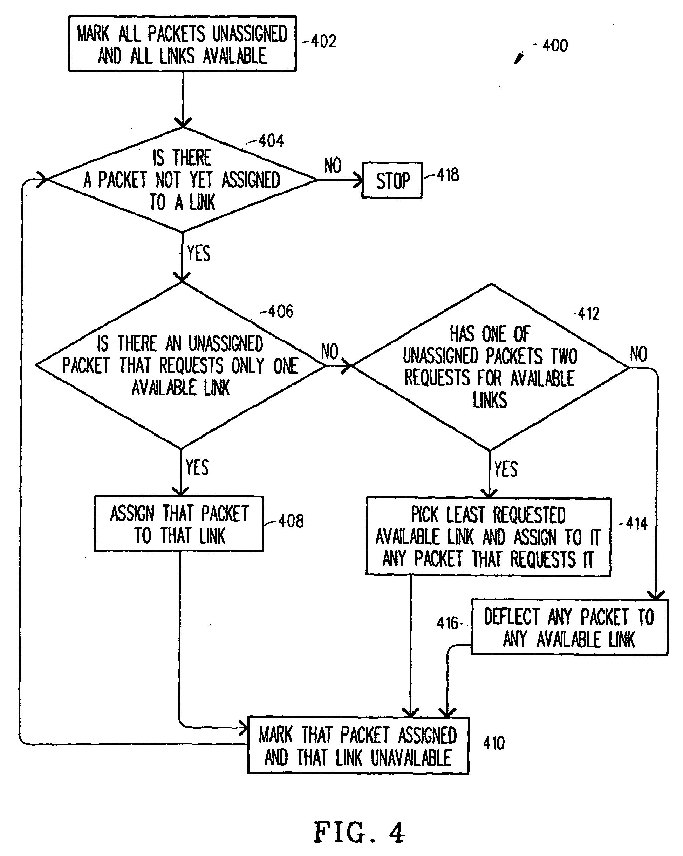

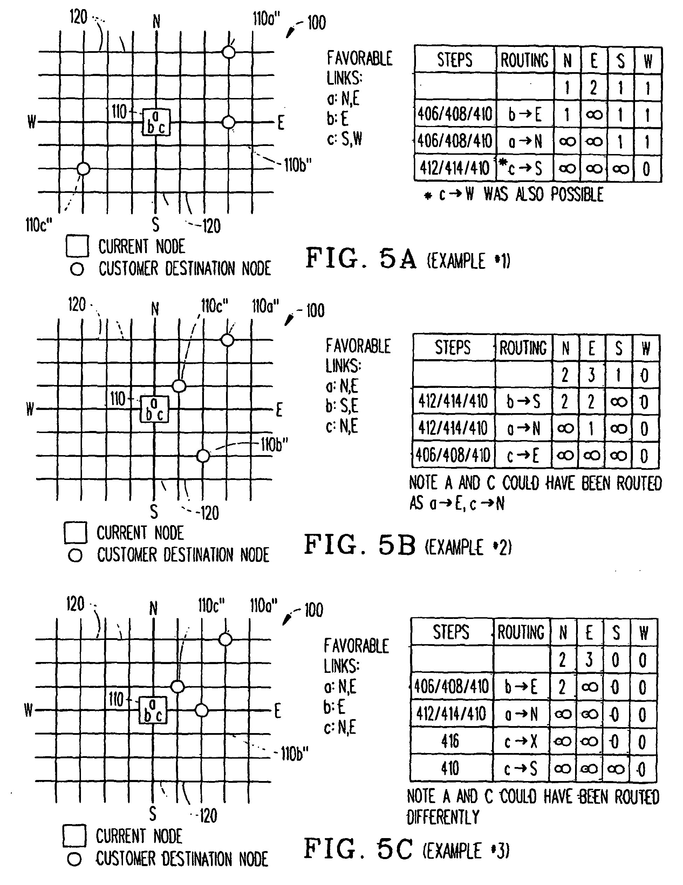

Referring to FIGURE 4, there is a flowchart illustrating the steps of a preferred method 400 for executing the second embodiment of the minimum deflection routing algorithm 130b. To help better understand the different steps of the second embodiment of the minimum deflection routing algorithm 130b reference is made to five different examples in FIGURES 5A-5E.

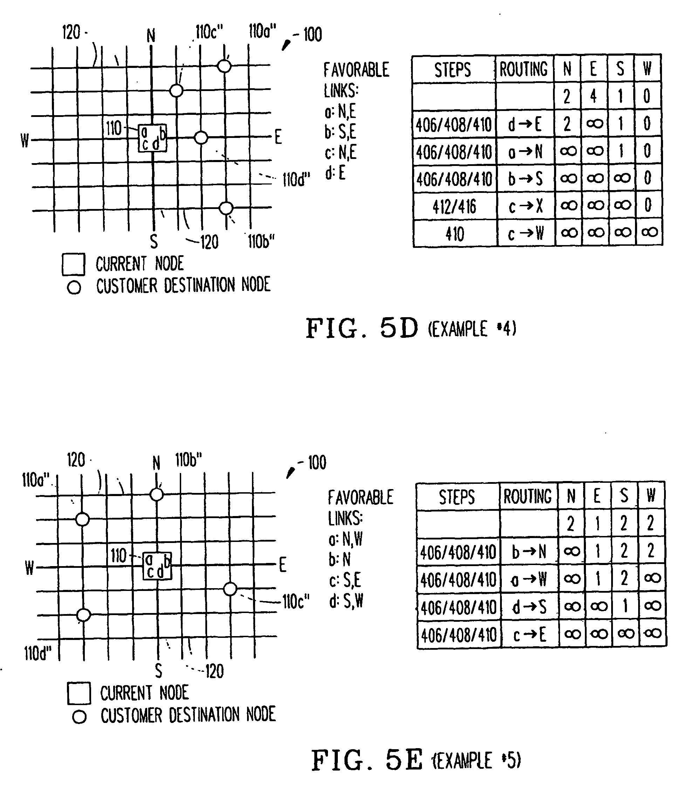

Beginning at step 402, the minimum deflection routing algorithm 130a marks all packets 140 as unassigned packets 140 and all links 120 are marked as available links 120. In FIGURES 5A-5E, the packets 140 (shown as packets "a", "b", "c" and "d") are located within node 110 (shown as current node 110) and want to get to their destination nodes 110" (shown as destination nodes 110a", 110b", 110c" and 110d"). The location of the destination nodes 110a", 110b", 110c" and 110d" indicate which links 120 are favorable links 120 for the respective packets 149a, 140b, 140c and 140d. In example #4 shown in FIGURE 5D, the favorable links 120 (shown as directions N, S, E and W) for each packet 140a, 140b, 140c and 140d are as follows:

- packet 140a: N and E.
- packet 140b: S and E.
- packet 140c: N and E.
- packet 140d: E.

At step 404, the minimum deflection routing algorithm 130a determines if there is a packet 140 not yet assigned to a link 120. If the answer to step 404 is no, then at step 418 the minimum deflection routing algorithm 130b is stopped.

Referring to example #4 in FIGURE 5D, for the first time through step 404 none of the packets 140a, 140b, 140c or 140d are assigned to a link 120 (goto step 406). For the second time through step 404, packets 140a, 140b and 140c are not assigned to a link 120 (goto step 406). For the third time through step 404, packets 140c and 140b are not assigned to a link 120 (goto step 406). For the fourth time through step 404, packet 140c is not assigned to a link 120 (goto step 406). For the fifth time through step 404, all the packets 140a, 140b, 140c and 140d have all been assigned so the minimum deflection routing algorithm 130a stops.

If the answer to step 404 is yes, then at step 406 the minimum deflection routing algorithm 130b determines if one of the unassigned packets 140 requested only one available link 120.

Referring to example #4 in FIGURE 5D, for the first time through step 406 there is one unassigned packet 140d that requested only one available link 120 (shown as direction E)(goto step 408). For the second time through step 406, each of the packets 140a, 140b and 140c had requested only one available link 120 (since direction E is no longer available). For the third time through step 406, packet 140b had requested only one available link 120 (direction S since requested direction E is no longer available). For the fourth time through step 406, since packet 140c does not have a request for an available link 120 then the method proceeds to step 416. It should be understood that at step 406 if several packets are requesting only one available link 120, then one of these packets is selected arbitrarily.

If the answer to step 406 is yes, then at step 408 the minimum deflection routing algorithm 130a assigns that unassigned packet 140 to that available link 120. Then at step 410, the minimum deflection routing algorithm 130b marks that packet 140 as assigned and marks that link 120 as unavailable. The minimum deflection routing algorithm 130a then returns to the first determining step 404.

Referring to example #4 in FIGURE 5D, for the first time through step 408, the packet 140d is assigned to the uniquely requested one available link 120 (shown as direction E) and that link 120 is marked as unavailable (goto step 404). For the second time through step 408, the packet 140a is assigned to the uniquely requested one available link 120 (shown as direction N) and that link 120 is marked as unavailable (goto step 404). For the third time through step 408, the packet 140b is assigned to the uniquely requested one available link 120 (shown as direction S) and that link 120 is marked as unavailable (goto step 404).

If the answer to step 406 is no, then at step 412 the minimum deflection routing algorithm 130b determines if one of the unassigned packets 140 has two requests for available links 120.

Referring to example #4 in FIGURE 5D, at this time none of the packets have two requests for available links 120.

If the answer to step 412 is yes, then at step 414 the minimum deflection routing algorithm 130b picks one of the available links 120 requested the least by all of the unassigned packets and assigns that packet 140 to that link 120. Again, it should be understood at step 414 that if several packets are requesting only one available link 120, then one of these packets is selected arbitrarily. Then at step 410, the minimum deflection routing algorithm 130b marks that packet 140 as assigned and marks that link 120 as unavailable. The minimum deflection routing algorithm 130b then returns to the first determining step 404.

Referring to example #4 in FIGURE 5D, at this time none of the unassigned packets have two requests for available links 120.

If the answer to step 412 is no, then at step 416 the minimum deflection routing algorithm 130a deflects and assigns any unassigned packet 140 to any link 120 that is currently available even though that link 120 was not requested by that packet 140. Then at step 410, the minimum deflection routing algorithm 130a marks that packet 140 as assigned and marks that link 120 as unavailable. The minimum deflection routing algorithm 130a then returns to the first determining step 404.

Referring to example #4 in FIGURE 5D, for the first time through step 416, the packet 140c which had requested links 120 (directions N and E) that have been assigned to other packets 140a and 140d has been deflected to an available link 120 (direction W) and that link 120 (direction W) is marked as unavailable (goto step 404).

The remaining examples #1-3 and #5 shown in FIGURES 5A-5C and 5E are provided to help one better understand the different steps of the second embodiment of the minimum deflection routing algorithm 130b. It should be understood that there are many different ways one could implement the second embodiment of the minimum deflection routing algorithm 130b to obtain the same results.

Below is another way to describe the second embodiment of the minimum deflection routing algorithm 130a using terminology associated with a non-weighted bipartite graph. Again, BG = $(V_c, V_d, E)$ is the bipartite graph representing the packets 140 and directions 120. The minimum deflection routing algorithm 130b that computes a routing R can be represented as:

$$R = \phi$$

while $E \neq \phi$

```
if  ∃ (u,v) ∈ E with deg(u) = 1
        R=R ∪ {(u,v)}        [PART A]
    else
        pick any (u,v) ∈ E such that deg(v) is minimum
        R=R ∪ {(u,v)}        [PART B]
```

remove all edges in E that are adjacent to vertices u or v, where u is a packet and v is a direction.

Like above, it should be noted that this representation of the minimum deflection routing algorithm 130b does not mention the actual deflection of packets, but the packets that can not be assigned to a favorable link are deflected the same as steps 416 and 410 in method 400.

The minimum deflection routing for algorithm 130b which is composed of two parts A and B has a similar proof as algorithm 130a where part A is based on Lemma 1A in algorithm 130a and part B is just a specific implementation of algorithm 130a.

THIRD EMBODIMENT

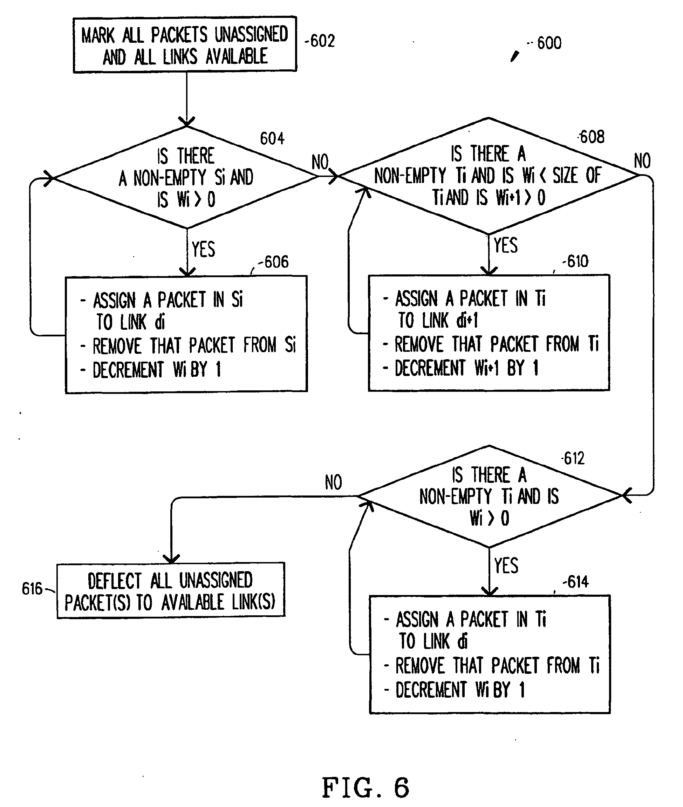

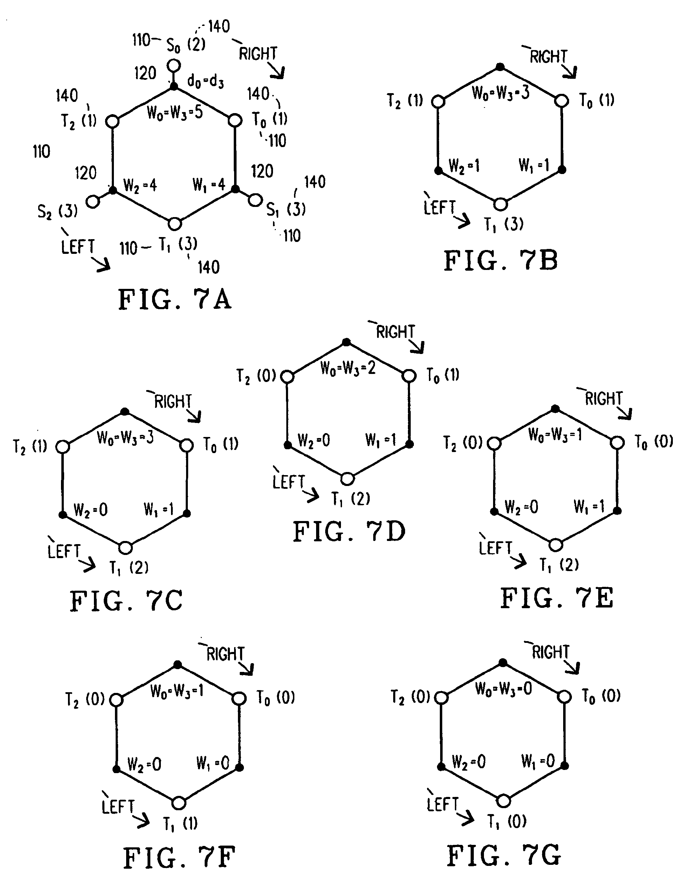

Referring to FIGURE 6, there is a flowchart illustrating the steps of a preferred method 600 for executing the third embodiment of the minimum deflection routing algorithm 130c. Algorithm 130c is similar to algorithms 130a and 130b, except that algorithm 130c is associated with a packet that requests at most 2 contiguous directions. To help better understand the different steps of the third embodiment of the minimum deflection routing algorithm 130c reference is made to the example shown in FIGURES 7A-7G.

First, the minimum deflection routing algorithm 130c has the following defined parameters:

- Each packet 140 requests at most 2 contiguous directions.
- $S_i$ is the set of packets 140 requesting only one link ($d_i$).
- $T_i$ is the set of packets 140 requesting two contiguous links ($d_i$ and $d_{i+1}$).
- $W_i$ is the weight of link ($d_i$).

Referring to the example shown in FIGURE 7A, there is shown an adjacent $BG_2$ graph with a number of packets 140 that are going to be assigned to a link 120 using the minimum deflection routing algorithm 130c.

Beginning at step 602, the minimum deflection routing algorithm 130c marks all packets 140 as unassigned packets 140 and all links 120 are marked as available links 120.

At step 604, the minimum deflection routing algorithm 130c determines if there is a non-empty $S_i$ and if $w_i > 0$. If the answer to step 604 is yes, then at step 606 the minimum deflection routing algorithm 130c assigns a packet 140 in $S_i$ to link $d_i$, removes that packet 140 from $S_i$, decrements $w_i$ by one and returns to the first determining step 604. Steps 604 and 606 are also known as the first stage (degree 1 assign) of the minimum deflection routing algorithm 130c.

Referring to the example shown in FIGURE 7B, at this time all of the packets 140 in $S_i$ are assigned to link $d_i$ so long as $w_i > 0$ (compare this $BG_2$ graph to the $BG_2$ shown in FIGURE 7A).

If the answer to step 604 is no, then at step 608 the minimum deflection routing algorithm 130c determines if there is a non-empty $T_i$ and if $w_i$ is less than a size of $T_i$ and $w_{i+1} > 0$. If the answer to step 608 is yes, then at step 610 the minimum deflection routing algorithm 130c assigns a packet 140 in $T_i$ to link $d_{i+1}$, removes that packet 140 from $T_i$, decrements $w_{i+1}$ by one and returns to the second determining step 608. Steps 608 and 610 are also known as the second stage (right assign) of the minimum deflection routing algorithm 130c.

Referring to the example shown in FIGURE 7C, during the first time through steps 608 and 610 where $|T_1| > w_1$ and $w_2 > 0$ then the minimum deflection routing algorithm 130c assigns one packet 140 in $T_1$ to link $d_2$ (compare this $BG_2$ graph to the $BG_2$ shown in FIGURE 7B). Referring to FIGURE 7D, for the second time through steps 608 and 610 where $|T_2| > w_2$ and $w_3 = w_0 > 0$ then the minimum deflection routing algorithm 130c assigns one packet 140 in $T_2$ to link $d_3$ (compare this $BG_2$ graph to the $BG_2$ shown in FIGURE 7C).

If the answer to step 608 is no, then at step 612 the minimum deflection routing algorithm 130c determines if there is a non-empty $T_i$ and if $w_i > 0$. If the answer to step 612 is yes, then at step 614 the minimum deflection routing algorithm 130c assigns a packet 140 in $T_i$ to link $d_i$, removes that packet 140 from $T_i$, decrements $w_i$ by one and returns to the third determining step 612. Steps 612 and 614 are also known as the third stage (left assign) of the minimum deflection routing algorithm 130c.

Referring to the example shown in FIGURE 7E, during the first time through steps 608 and 610 where $T_0$ is not empty and $w_0 > 0$ then the minimum deflection routing algorithm 130c assigns one packet 140 in To to link do (compare this $BG_2$ graph to the $BG_2$ shown in FIGURE 7D). Referring to FIGURE 7F, for the second time through steps 612 and 614 where $T_1$ is not empty and $w_1 > 0$ then the minimum deflection routing algorithm 130c assigns one packet 140 in $T_1$ to link $d_1$ (compare this $BG_2$ graph to the $BG_2$ shown in FIGURE 7E).

If the answer to step 612 is yes, then at step 616 the minimum deflection routing algorithm 130c deflects and assigns all remaining unassigned packets 140 to remaining unassigned links 120. After this the minimum deflection routing algorithm 130c is stopped.

Referring to the example shown in FIGURE 7G, during the first time through step 616 where an unassigned packet 140 in $T_1$ is assigned to link do (compare this $BG_2$ graph to the $BG_2$ shown in FIGURE 7F).

Below is another way to describe the third embodiment of the minimum deflection routing algorithm 130c using terminology associated with a bipartite graph with weights on $V_d$. For a graph BG = $(V_c, V_d, E)$, assume that each direction in $V_d$ has a weight w and can accommodate up to w packets instead of only one. Also, assume that the weighted graph satisfies the following adjacency property.

Definition 1C: A graph BG = $(V_c, V_d, E)$ is said to be adjacent if there exist a circular ordering of the directions $< d_0, d_1, d_2, ..., d_{|Vd|-1}, d_0 >$, such that each packet is requesting a contiguous subset of directions in $V_d$.

As an example, in the square grid network one can order the directions as follows:

< North, East, South, West, North >

Each packet 140 requests a contiguous subset of these links 120 on its favorable (i.e. shortest) path to its final destination node 110'''. The possibilities are: N, E, W, S, NE, SE, NW, and SW.

In general, most of the practical network topologies when presented with a set of requests result in an adjacent $BG_2$ graph at every node 110. Therefore, adjacent $BG_2$ graphs are used (see FIGURE 7A). Note that in an adjacent $BG_2$ graph, a packet 140 can request only $d_i$ and $d_{i+1}$ for some i = 0...$|V_d|$, where $V|_{vd|} = V_0$. For convenience, the inventors use a different representation of the adjacent $BG_2$ graph. Let $do, d_1,..., d|_{vd}|$ represent the ordered directions. Let $w_i$ for $i = 0 ...... |V_d|$ be the weight of direction $d_i$. Let $S_i$ for $i = 0...|V_d|-1$ represent the set of packets 140 that are requesting direction $d_i$ only. Let $T_i$ for $i = 0...|V_d|-1$ be the set of packets 140 that are requesting directions $d_i$ and $d_{i+1}$. This representation is shown in FIGURE 7 for $|V_d| = 3$ (but other directions are possible).

It should be understood that a representation similar to that of FIGURE 7 can be obtained for any adjacent $BG_2$ graph with any number of directions $|V_d|$. Note the Right and Left conventions illustrated in FIGURE 7.

The minimum deflection routing algorithm 130c has three stages. In the first stage, the routing strategy 130c makes assignments from the sets $S_i$ (see steps 604 and 606). In the second stage, the routing strategy 130c makes assignments from the sets $T_i$ to the right (see steps 608 and 610). In the third stage, the routing strategy 130c makes assignments from the sets $T_i$ to the left (see steps 612 and 614).

where:

Each packet requests at most 2 contiguous directions;
$S_i$ is the set of packets requesting only one link ($d_i$) ;
$T_i$ is the set of packets requesting two contiguous links ($d_i$ and $d_{i+1}$) ; and
$W_i$ is the weight of link ($d_i$);

$$R = \phi$$

while $\exists i$ such that $S_i \neq \phi$ and $W_i > 0$ (degree 1 assign)
pick any packet $c \in S_i$
$S_i = S_i - \{c\}$
$w_i = w_i - 1$
$R = R \cup \{(c, d_i)\}$
while $\exists i$ such that $|T_i| > w_i$ and $w_{i+1} > 0$ (right assign)
pick any packet $c \in T_i$
$T_i = Ti - \{c\}$
$W_{i+1} = W_{i+1} - 1$
$R = R \cup \{(c, d_{i+1})\}$
while $\exists i$ such that $T_i \neq \phi$ and $w_i > 0$ (left assign)
pick any packet $c \in T_i$
$T_i = T_i - \{c\}$
$w_i = w_i - 1$
$R = R \cup \{(c, d_i)\}$

By the symmetry of the minimum deflection routing algorithm 130c, the Right and Left conventions of FIGURE 7 can be reversed. Not only that, but it is also possible for the minimum deflection routing algorithm 130c to reverse the Right and Left conventions at any time during its operation. This might be useful in practice as the following argument illustrates. The first and third stages are straight-forward because they basically entail assigning, for $i = 0...|V_d|-1$, as many packets 140 as possible from $S_i$ to $d_i$ and from $T_i$ to the Left respectively. Therefore, the conditions of the first and third stages do not need to be checked explicitly. If by reversing the Right and Left conventions, the condition for the second stage becomes unsatisfied, the minimum deflection routing algorithm 130c can go directly to the third stage and reduce the number of times the condition in the second stage needs to be checked.

Below the inventors prove that the minimum deflection routing algorithm 130c computes a minimum deflection routing. First, the inventors state and prove a simple lemma similar to Lemma 1A in the first embodiment of the minimum deflection routing algorithm 130a.

Lemma 1C: In an adjacent weighted $BG_2$ graph, if $S_i \neq 0$ and $w_i > 0$, there exists a minimum deflection routing that assigns a packet 140 in $S_i$ to direction $d_i$.

Proof: Consider a minimum deflection routing R that does not assign a packet in $S_i$ to $d_i$. This implies that all the packets in $S_i$ are deflected in R since they all request $d_i$ only. Let c be an arbitrary packet in $S_i$. Assign c to $d_i$ and deflect one packet that is already assigned to $d_i$ in R, thus not exceeding the weight $w_i$. One obtains a minimum deflection routing R' that assigns a packet in $S_i$ to $d_i$.

Lemma 1C justifies the first stage of the minimum deflection routing algorithm 130c. Note that after the first stage is done $w_i > 0$ and $S_i = 0$. Next the inventors prove another lemma that shows that the work done in the second stage does not violate the minimum deflection routing.

Lemma 2C: In an adjacent weighted $BG_2$ graph, if $|T_i| > w_i$ and if $w_{i+1} > 0$, there exists a minimum eflection routing that assigns a packet in $T_i$ to $d_{i+1}$.

Proof: Consider a minimum deflection routing R that does not assign a packet from $T_i$ to $d_{i+1}$. Since $|T_i| > w_i$, there must be a packet c in $T_i$ that is deflected. One can assign c to $d_{i+1}$ and deflect one packet c that is already assigned to $d_{i+1}$ in R, thus not exceeding the weight $w_{i+1}$. One obtains a minimum deflection routing R' that assigns a packet in $T_i$ to $d_{i+1}$. Note that Lemma 1C and Lemma 2C are independent, implying that the first and second stages of the minimum deflection routing algorithm 130c can be interleaved in any way until both stages are done. Note also that after the second stage is done $w_{i+1} > 0$ and $|T_i| \leq w_i$. The next lemma provides a justification for the last stage of the minimum deflection routing algorithm 130c.

Lemma 3C: In an adjacent weighted $BG_2$ graph, if ($w_i > 0$ or $S_i = 0$) and ($w_{i+1} > 0$ or $|T_j| \leq w_i$), then the routing that assigns min ($w_j$, $|T_j|$) packets in $T_j$ to $d_j$ is a minimum deflection routing.

Proof: Consider the routing R that assigns min ($w_j$, $|T_j|$) packets in $T_j$ to $d_j$ (the third stage). The inventors prove that R is a minimum deflection routing. Since $w_j > 0$ and $S_j = 0$, no routing can assign any packet in the sets $S_i$. On the other hand, a minimum deflection routing cannot assign more than min ($w_j$, $|T_j|$) packets in $T_j$ for which $w_{j+1} = 0$, and in general cannot assign more than $|T_j|$ packets in $T_j$. For all j such that $w_{j+1} = 0$, R assigns min ($w_j$, $|T_j|$) packets in $T_j$ to $d_j$. For all $j$ such that $w_{j+1} > 0$, it is known that $|T_j| \leq w_j$ and hence assigns min($w_j$, $|T_j|$) = $|T_j|$ packets in $T_j$ to $d_j$. Therefore, the number of packets in the sets $T_i$ assigned in the routing R is at least equal to the number of packets in the sets $T_i$ that are assigned in a minimum deflection routing. As a result, the total number of packets assigned in R is equal to the total number of packets assigned in a minimum deflection routing, hence R is a minimum deflection routing.

Using the above three lemmas, we can prove the following result:

Theorem 1C: The minimum deflection routing algorithm 130c computes a minimum deflection routing in an adjacent weighted $BG_2$ graph.

Proof: First the inventors note that after the first and second stages are done, $w_i > 0$ and $S_i = 0$, and $w_{i+1} > 0$ and $|T_j| \leq w_j$ for all i = 0... $|V_d|$-1. Therefore, one can conclude that starting from the third stage, the minimum deflection routing algorithm 130c computes a minimum deflection routing by Lemma 3, since it assigns min($W_j$, $|T_j|$) packets in $T_j$ to $d_j$. By Lemma 1C and Lemma 2C, up to the end of the first and second stages, the minimum deflection routing algorithm 130c makes assignments that are part of a minimum deflection routing. Therefore, the minimum deflection routing algorithm 130c computes a minimum deflection routing in an adjacent weighted $BG_2$.

The minimum deflection routing algorithm 130c also has a linear time complexity in the RAM model as stated in the following theorem:

Theorem 2C: The time complexity of the minimum deflection routing algorithm 130c is O ($|V_c|$) in the RAM model.

Proof: First note that the representation of FIGURE 7 can be obtained in O ($|V_c|$) since $|V_d| \leq 2|V_c|$. In each step of the minimum deflection routing algorithm 130c, one packet is removed from a set of packets. When a packet is removed, a constant time is needed to update the size of a set and the weight of a direction. Checking the conditions in the different stages can also be done in constant time by maintaining information about the different sets $S_i$ and $T_i$, and updating that information whenever a packet is removed. More precisely, for a specific condition, a list of sets that satisfy the condition can be maintained and updated. As a result, checking a condition would be equivalent to checking whether the list is empty. If each set has pointers to its requested directions and each direction has pointers to its left and right sets of packets, then the work spent on updating the list will be constant after each removal of a packet; this is because the removal of a packet can affect at most two sets: it will decrease the size of the set to which it belongs and the weight of the direction to which it is assigned, which in turn affects the condition involving at most one other set of packets. Therefore, the complexity of the minimum deflection routing algorithm 130c is O ($|V_c|$).

As described above, the three embodiments of the routing strategy 130 can be characterized as either a non-weighted minimum deflection routing algorithm 130a and 130b (first and second embodiments) or a weighted minimum deflection routing algorithm 130c (third embodiment). By definition, a minimum deflection routing algorithm 130a and 130b (first and second embodiments) in the non-weighted $BG_2$ is also a maximum cardinality matching. The best way for computing the maximum cardinality matching is to run the algorithm in O ($m*n^{1/2}$) time; therefore, it requires O ($n^{1-5}$) time to find a minimum deflection routing in a non-weighted $BG_2$ since m is at most equal to 2n. As such, the algorithm for computing a minimum deflection routing strategy 130a and 130b in a non-weighted $BG_2$ should run in O (n) time.

In contrast, the problem of computing a minimum deflection routing strategy 130c (third embodiment) in a weighted $BG_2$ can be cast into a maximum flow problem which can be solved using a standard maximum flow algorithm. However, by imposing a special structure on the weighted $BG_2$, one is able to obtain an 0(n) algorithm for computing a minimum deflection routing in a weighted $BG_2$. It should be noted that the weighted $BG_2$ is assigned a weight w for each link 120 and hence each link 120 can accommodate up to w packets.

Although several embodiments of the present invention have been illustrated in the accompanying Drawings and described in the foregoing Detailed Description, it should be understood that the invention is not limited to the embodiments disclosed, but is capable of numerous rearrangements, modifications and substitutions without departing from the invention as set forth and defined by the following claims.

## Claims

1. A method for executing a routing strategy to deflect a minimum number of packets in a bufferless network (100) that includes a plurality of links (120) that connect together a plurality of nodes (110), said method comprising the step of: executing, at each node (110), a routing strategy that deflects a minimum number of packets (140) to unfavorable nodes (110') instead of to favorable nodes (110") that are closer to their final destination nodes (110'''), wherein each packet (140) has at most two favorable links (120') to two favorable nodes (110") on which they would like to travel to get to their final destination node (110'''), said method being **characterized by** the following steps: marking (202) all packets (140) as unassigned packets and all links (120) as available links; and determining (204) if there is a packet (140) not yet assigned to a link (120); if no, stopping (218) the minimum deflection routing algorithm; if yes, determining (206) if there is an available link that is requested by only one of the unassigned packets; if yes, assigning (208) that packet to that available link and marking (210) that packet assigned and that link unavailable and then returning to the first determining step (204); if no, determining (212) if anyone of the unassigned packets has a request for one or more available links; if yes, assigning (214) that packet to anyone of these available links and marking (210) that packet assigned and that link unavailable and then returning to the first determining step (204); and if no, deflecting (216) and assigning that packet to any link that is currently available even though that link was not requested by the packet and then marking (210) that packet assigned and that link unavailable and then returning to the first determining step (204).

2. A method for executing a routing strategy to deflect a minimum number of packets in a bufferless network (100) that includes a plurality of links (120) that connect together a plurality of nodes (110), said method comprising the step of: executing, at each node (110), a routing strategy that deflects a minimum number of packets (140) to unfavorable nodes (110') instead of to favorable nodes (110") that are closer to their final destination nodes (110'''), wherein each packet (140) has at most two favorable links (120') to two favorable nodes (110") on which they would like to travel to get to their final destination node (110' ' '), said method being **characterized by** the following steps: marking (402) all packets (140) as unassigned packets and all links (120) as available links; and determining (404) if there is a packet not yet assigned to a link ; if no, stopping (418) the minimum deffection routing algorithm; if yes, determining (406) if one of the unassigned packets requested only one available link; if yes, assigning (408) that packet to that available link and marking (410) that packet assigned and that link unavailable and then returning to the first determining step (404); if no, determining (412) if one of the unassigned packets has two requests for available links; if yes, picking (414) one of the available links requested the least by the unassigned packets and assigning that link to a packet requesting that link and marking (410) that packet assigned and that link unavailable and then returning to the first determining step (404); and if no, deflecting (416) and assigning a packet to any link that is currently available even though that link was not requested by the packet and then marking (410) that packet assigned and that link unavailable and then returning to the first determining step (404).

3. A method for executing a routing strategy to deflect a minimum number of packets in a bufferless network (100) that includes a plurality of links (120) that connect together a plurality of nodes (110), said method comprising the step of: executing, at each node (110), a routing strategy that deflects a minimum number of packets (140) to unfavorable nodes (110') instead of to favorable nodes (110'') that are closer to their final destination nodes (110'''), wherein each packet (140) has at most two favorable links (120') to two favorable nodes (110") on which they would like to travel to get to their final destination node (110'''), said method being **characterized by** the following steps, wherein

 o each packet requests at most two contiguous directions;
 o $S_i$ is the set of packets requesting only one link ($d_i$) ;
 o $T_i$ is the set of packets requesting two contiguous links ($d_i$ and $d_{i+1}$);
 o $w_i$ is the weight of link ($d_i$), said weight $w_i$ representing the number of packets which said link ($d_i$) can accommodate:

  marking (602) all packets as unassigned packets and all links as available links; and determining (604) if there is a non-empty $S_i$ and if $w_i > 0$; if yes, assigning (606) a packet in $S_i$ to link $d_i$ and removing that packet

from $S_i$ and decrementing $w_i$ by one and returning to the first determining step (604); if no, determining (608) if there is a non-empty $T_i$ and if $w_i$ is less than a size of $T_i$ and if $w_{i+1}>0$ ; if yes, assigning (610) a packet in $T_i$ to link $d_{i+1}$ and removing that packet from $T_i$ and decrementing $w_{i+1}$ by one and returning to the second determining step (608); if no, determining (612) if there is a non-empty $T_i$ and if $w_i >0$; if yes, assigning (614) a packet in $T_i$ to link $d_i$ and removing that packet from $T_i$ and decrementing $w_i$ by one and returning to the third determining step (612); if no, deflecting (616) and assigning all remaining unassigned packets to remaining unassigned links and then stopping the minimum deflection routing algorithm.

**4.** The method according to one of the Claims 1 to 3, wherein said bufferless network (100) is a synchronous optical burst network.

**5.** The method according to one of the Claims 1 to 4, wherein each node (110) is a bufferless node.

**6.** A bufferless network (100), comprising: a plurality of nodes (110); and a plurality of links (120) which connect together said nodes (110), each node (110) is adapted to execute a routing strategy that deflects a minimum number of packets (140) to unfavorable nodes (110') instead of to favorable nodes (110'') that are closer to their final destination nodes (110'''), wherein each packet (140) has at most two favorable links (120') to two favorable nodes (110") on which they would like to travel to get to their final destination node (110'''), **characterized in that** said nodes (110) are adapted to execute a routing strategy according to all the steps of the method of one of the preceding claims.

**7.** The bufferless network (100) of Claim 6, wherein said bufferless network (100) is a synchronous optical burst network.

**8.** The bufferless network (100) of Claim 6 or 7, wherein each node (110) is a bufferless node.

## Patentansprüche

**1.** Verfahren zum Ausführen einer Wegelenkungsstrategie, um eine minimale Anzahl von Paketen In einem pufferlosen Netz (100) abzulenken, welches eine Vielzahl von Verbindungen (120) umfasst, die zusammen eine Vielzahl von Knoten (110) verbinden, wobei dieses Verfahren den Schritt umfasst des Ausführens, in jedem Knoten (110), von einer Wegelenkungsstrategie, welche eine minimale Anzahl von Paketen (140) zu ungünstigen Knoten (110') ablenkt statt zu günstigen Knoten (110"), die näher an ihren endgültigen Zielknoten (110''') liegen, wobei jedes Paket (140) höchstens zwei günstige Verbindungen (120') zu zwei günstigen Knoten (110") besitzt, auf denen es sich bewegen möchte, um zu seinem jeweiligen endgültigen Zielknoten (110''') zu kommen, wobei dieses Verfahren durch die folgenden Schritte **gekennzeichnet** ist: Kennzeichnen (202) aller Pakete (140) als nicht zugewiesene Pakete und aller Verbindungen (120) als verfügbare Verbindungen; und Feststellen (204), ob es ein Paket (140) gibt, das noch nicht einer Verbindung (120) zugewiesen wurde; bei negativer Antwort Anhalten (218) des Wegelenkungs-Algorithmus; bei positiver Antwort Feststellen (206), ob es eine verfügbare Verbindung gibt, die von nur einem der nicht zugewiesenen Paket angefordert wird; bei positiver Antwort Zuweisen (208) dieses Pakets zu der verfügbaren Verbindung und Kennzeichnen (210) dieses Pakets als zugewiesen und dieser Verbindung als nicht verfügbar und anschließend Zurückkehren zum ersten Feststellungsschritt (204); bei negativer Antwort Feststellen (212), ob irgendeines der nicht zugewiesenen Pakete eine Anforderung für eine oder mehrere verfügbare Verbindungen hat; bei positiver Antwort Zuweisen (214) dieses Pakets zu einer beliebigen dieser verfügbaren Verbindungen und Kennzeichnen (210) dieses Pakets als zugewiesen und dieser Verbindung als nicht verfügbar und anschließend Zurückkehren zum ersten Feststellungsschritt (204); bei negativer Antwort Ablenken (216) dieses Pakets und Zuweisen zu einer beliebigen Verbindung, die gerade verfügbar ist, selbst wenn diese Verbindung von dem Paket nicht angefordert wurde, und anschließend Kennzeichnen (210) dieses Pakets als zugewiesen und dieser Verbindung als nicht verfügbar und danach Zurückkehren zum ersten Feststellungsschritt (204).

**2.** Verfahren zum Ausführen einer Wegelenkungsstrategie, um eine minimale Anzahl von Paketen in einem pufferlosen Netz (100) abzulenken, welches eine Vielzahl von Verbindungen (120) umfasst, die zusammen eine Vielzahl von Knoten (110) verbinden, wobei dieses Verfahren den Schritt umfasst des Ausführens, in jedem Knoten (110), von einer Wegelenkungsstrategie, welche eine minimale Anzahl von Paketen (140) zu ungünstigen Knoten (110') ablenkt statt zu günstigen Knoten (110"), die näher an ihren endgültigen Zielknoten (110''') liegen, wobei jedes Paket (140) höchstens zwei günstige Verbindungen (120') zu zwei günstigen Knoten (110") besitzt, auf denen es sich bewegen möchte, um zu seinem jeweiligen endgültigen Zielknoten (110''') zu kommen, wobei dieses Verfahren durch die folgenden Schritte **gekennzeichnet** ist: Kennzeichnen (402) aller Pakete (140) als nicht zugewiesene Pakete und aller Verbindungen (120) als verfügbare Verbindungen; und Feststellen (404), ob es ein Paket gibt, das noch nicht einer Verbindung zugewiesen wurde; bei negativer Antwort Anhalten (418) des Wegelenkungs-Algorithmus; bei positiver Antwort Feststellen (406), ob eines der nicht zugewiesenen Pakete nur eine verfügbare Verbindung angefordert hat; bei positiver Antwort Zuweisen (408) dieses Pakets zu dieser verfügbaren Verbindungen und Kennzeichnen (410) dieses Pakets als zugewiesen und dieser Verbindung als nicht verfügbar und anschließend Zurückkehren zum ersten Feststellungsschritt (404); bei negativer Antwort Feststellen (412), ob eines der nicht zugewiesenen Pakete zwei Anforderungen für verfügbare Verbindungen besitzt; bei positiver Antwort Auswählen (414) einer der verfügbaren Verbindungen, die am wenigsten von den nicht zugewiesenen Paketen angefordert wird, und Zuweisen dieser Verbindung zu einem Paket, welches diese Verbindung anfordert, und Kennzeichnen (410) dieses Paketes als zugewiesen und dieser Verbindung als nicht verfügbar und anschließend Zurückkehren zum ersten Feststellungsschritt (404); bei negativer Antwort Ablenken (416) eines Pakets und Zuweisen zu einer beliebigen Verbindung, die gerade verfügbar ist, selbst wenn diese Verbindung von dem Paket nicht angefordert wurde, und Kennzeichnen (410) dieses Pakets als zugewiesen und dieser Verbindung als nicht verfügbar und danach Zurückkehren zum ersten Feststellungsschritt (404).

3. Verfahren zum Ausführen einer Wegelenkungsstrategie, um eine minimale Anzahl von Paketen in einem pufferlosen Netz (100) abzulenken, welches eine Vielzahl von Verbindungen (120) umfasst, die zusammen eine Vielzahl von Knoten (110) verbinden, wobei dieses Verfahren den Schritt umfasst des Ausführens, in jedem Knoten (110), von einer Wegelenkungsstrategie, welche eine minimale Anzahl von Paketen (140) zu ungünstigen Knoten (110') ablenkt statt zu günstigen Knoten (110"), die näher an ihren endgültigen Zielknoten (110"') liegen, wobei jedes Paket (140) höchstens zwei günstige Verbindungen (120') zu zwei günstigen Knoten (110") besitzt, auf denen es sich bewegen möchte, um zu seinem jeweiligen endgültigen Zielknoten (110"') zu kommen, wobei dieses Verfahren durch die folgenden Schritte **gekennzeichnet** ist, in denen:

- jedes Paket höchstens zwei angrenzende Richtungen anfordert;
- $S_i$ die Menge der Pakete ist, die nur eine Verbindung ($d_i$) anfordern;
- $T_i$ die Menge der Pakete ist, die zwei angrenzende Verbindungen ($d_i$ und $d_{i+1}$) anfordern;
- $w_i$ das Gewicht der Verbindung ($d_i$) ist, wobei das Gewicht $w_i$ der Anzahl der Pakete entspricht, die die Verbindung ($d_i$) aufnehmen kann;

Kennzeichnen (602) aller Pakete als nicht zugewiesene Pakete und aller Verbindungen als verfügbare Verbindungen; und Feststellen (604), ob es eine nicht-leere Menge $S_i$ gibt und ob $w_i > 0$; bei positiver Antwort Zuweisen (606) eines Pakets in $S_i$ zu der Verbindung $d_i$ und Entfernen dieses Pakets aus $S_i$ und Verringern von $w_i$ um eins und Zurückkehren zum ersten Feststellungsschritt (604); bei negativer Antwort Feststellen, ob es eine nicht-leere Menge $T_i$ gibt und ob $w_i$ kleiner als die Größe von $T_i$ und ob $w_{i+1} > 0$ ist; bei positiver Antwort Zuweisen (610) eines Pakets aus $T_i$ zu der Verbindung $dj_{,1}$ und Entfernen dieses Pakets aus $T_i$ und Verringern von $w_{i+1}$ um eins und Zurückkehren zum zweiten Feststellungsschritt (608); bei negativer Antwort Feststellen (612), ob es eine nicht-leere Menge $T_i$, gibt und ob $w_i > 0$ ist; bei positiver Antwort Zuweisen (614) eines Pakets in $T_i$ zu der Verbindung $d_i$ und Entfernen des Pakets aus $T_i$ und Vermindern von $w_i$ um eins sowie Zurückkehren zum dritten Feststellungsschritt (612); bei negativer Antwort Ablenken (616) und Zuweisen aller verbleibenden nicht zugewiesenen Pakete zu verbleibenden nicht zugewiesenen Verbindungen und anschließend Anhalten des Wegelenkungs-Algorithmus mit minimaler Ablenkung.

4. Verfahren nach einem der Ansprüche 1 bis 3, wobei das pufferlose Netz (100) ein im Burst-Modus arbeitendes synchrones optisches Netz ist.

5. Verfahren nach einem der Ansprüche 1 bis 4, bei dem jeder Knoten (110) ein pufferloser Knoten ist.

6. Pufferloses Netz (100), umfassend: eine Vielzahl von Knoten (110) und eine Vielzahl von Verbindungen (120), welche die Knoten (110) miteinander verbinden, wobei jeder Knoten (110) dafür geeignet ist, eine Wegelenkungsstrategie auszuführen, welche eine minimale Anzahl von Paketen (140) zu ungünstigen Knoten (110') ablenkt statt zu günstigen Knoten (110"), die näher an ihrem jeweiligen endgültigen Zielknoten (110"') liegen, wobei jedes Paket (140) höchstens zwei günstige Verbindungen (120') zu zwei günstigen Knoten (110") besitzt, auf denen es sich bewegen möchte, um zu seinem jeweiligen endgültigen Zielknoten (110"') zu kommen, **dadurch gekennzeichnet, dass** die Knoten (110) dafür geeignet sind, eine Wegelenkungsstrategie gemäß allen Schritten des Verfahrens von einem der vorhergehenden Ansprüche auszuführen.

7. Pufferloses Netz (100) nach Anspruch 6, wobei das pufferlose Netz (100) ein im Burst-Modus arbeitendes synchrones optisches Netz ist.

8. Verfahren nach Anspruch 6 oder 7, bei dem jeder Knoten (110) ein pufferloser Knoten ist.

**Revendications**

1. Procédé pour exécuter une stratégie de routage pour dévier un nombre minimum de paquets dans un réseau sans tampon (100) qui inclut une pluralité de liaisons (120) qui interconnectent une pluralité de noeuds (110), ledit procédé comprenant l'étape de : exécuter, au niveau de chaque noeud (110), une stratégie de routage qui dévie un nombre minimum de paquets (140) vers des noeuds défavorables (110') au lieu de noeuds favorables (110") qui sont plus près de leurs noeuds de destination finale (110'''), dans lequel chaque paquet (140) a au maximum deux liaisons favorables (120') vers deux noeuds favorables (110") sur lesquelles il voudrait se déplacer pour parvenir à son noeud de destination finale (110'''), ledit procédé étant **caractérisé par** les étapes suivantes : marquer (202) tous les paquets (140) comme paquets non attribués et toutes les liaisons (120) comme liaisons disponibles ; et déterminer (204) s'il y a un paquet (140) pas encore attribué à une liaison (120) ; si non, arrêter (218) l'algorithme de routage de déviation minimum ; si oui, déterminer (206) s'il y a une liaison disponible qui est demandée par un seul des paquets non attribués ; si oui, attribuer (208) ce paquet à cette liaison disponible et marquer (210) ce paquet attribué et cette liaison non disponible et ensuite retourner à la première étape de détermination (204) ; si non, déterminer (212) si l'un quelconque des paquets non attribués a une requête pour une ou plusieurs liaisons disponibles ; si oui, attribuer (214) ce paquet à l'une quelconque de ces liaisons disponibles et marquer (210) ce paquet attribué et cette liaison non disponible et ensuite retourner à la première étape de détermination (204) ; et si non, dévier (216) et attribuer ce paquet à toute liaison qui est actuellement disponible même si cette liaison n'était pas demandée par le paquet et ensuite marquer (210) ce paquet attribué et cette liaison non disponible et ensuite retourner à la première étape de détermination (204).

2. Procédé pour exécuter une stratégie de routage pour dévier un nombre minimum de paquets dans un réseau sans tampon (100) qui inclut une pluralité de liaisons (120) qui interconnectent une pluralité de noeuds (110), ledit procédé comprenant l'étape de : exécuter, au niveau de chaque noeud (110), une stratégie de routage qui dévie un nombre minimum de paquets (140) vers des noeuds défavorables (110') au lieu de noeuds favorables (110") qui sont plus près de leurs noeuds de destination finale (110'''), dans lequel chaque paquet (140) a au maximum deux liaisons favorables (120') vers deux noeuds favorables (110") sur lesquelles il voudrait se déplacer pour parvenir à son noeud de destination finale (110'''), ledit procédé étant **caractérisé par** les étapes suivantes : marquer (402) tous les paquets (140) comme paquets non attribués et toutes les liaisons (120) comme liaisons disponibles ; et déterminer (404) s'il y a un paquet pas encore attribué à une liaison ; si non, arrêter (418) l'algorithme de routage de déviation minimum ; si oui, déterminer (406) si un des paquets non attribués a demandé une seule liaison disponible ; si oui, attribuer (408) ce paquet à cette liaison disponible et marquer (410) ce paquet attribué et cette liaison non disponible et ensuite retourner à la première étape de détermination (404) ; si non, déterminer (412) si l'un quelconque des paquets non attribués a deux requêtes pour des liaisons disponibles ; si oui, choisir (414) une des liaisons disponibles demandées le moins par les paquets non attribués et attribuer cette liaison à un paquet demandant cette liaison et marquer (410) ce paquet attribué et cette liaison non disponible et ensuite retourner à la première étape de détermination (404) ; et si non, dévier (416) et attribuer un paquet à toute liaison qui est actuellement disponible même si cette liaison n'était pas demandée par le paquet et ensuite marquer (410) ce paquet attribué et cette liaison non disponible et ensuite retourner à la première étape de détermination (404).

3. Procédé pour exécuter une stratégie de routage pour dévier un nombre minimum de paquets dans un réseau sans tampon (100) qui inclut une pluralité de liaisons (120) qui interconnectent une pluralité de noeuds (110), ledit procédé comprenant l'étape de : exécuter, au niveau de chaque noeud (110), une stratégie de routage qui dévie un nombre minimum de paquets (140) vers des noeuds défavorables (110') au lieu de noeuds favorables (110") qui sont plus près de leurs noeuds de destination finale (110'''), dans lequel chaque paquet (140) a au maximum deux liaisons favorables (120') vers deux noeuds favorables (110") sur lesquelles il voudrait se déplacer pour parvenir à son noeud de destination finale (110'''), ledit procédé étant **caractérisé par** les étapes suivantes, dans lesquelles

- chaque paquet demande au maximum deux directions contiguës ;
- $S_i$ est l'ensemble de paquets demandant une seule liaison ($d_i$) ;
- $T_i$ est l'ensemble de paquets demandant deux liaisons contiguës ($d_i$ et $d_{i+1}$) ;
- $w_i$ est le poids de la liaison ($d_i$), ledit poids $w_i$ représentant le nombre de paquets que ladite liaison ($d_i$) peut loger :

marquer (602) tous les paquets comme paquets non attribués et toutes les liaisons comme liaisons disponibles ; et déterminer (604) s'il y a un $S_i$ non vide et si $w_i > 0$ ; si oui, attribuer (606) un paquet dans $S_i$ à la liaison $d_i$ et

enlever ce paquet de $S_i$ et décrémenter $w_i$ de un et retourner à la première étape de détermination (604) ; si non, déterminer (608) s'il y a un $T_i$ non vide et si $w_i$ est inférieur à une taille de $T_i$ et si $w_{i+1}>0$ ; si oui, attribuer (610) un paquet dans $T_i$ à la liaison $d_{i+1}$ et enlever ce paquet de $T_i$ et décrémenter $w_{i+1}$ de un et retourner à la deuxième étape de détermination (608) ; si non, déterminer (612) s'il y a un $T_i$ non vide et si $w_i > 0$ ; si oui, attribuer (614) un paquet dans $T_i$ à la liaison $d_i$ et enlever ce paquet de $T_i$ et décrémenter $w_i$ de un et retourner à la troisième étape de détermination (612) ; si non, dévier (616) et attribuer tous les paquets non attribués restants aux liaisons non attribuées restantes et ensuite arrêter l'algorithme de routage de déviation minimum.

4. Procédé selon une des revendications 1 à 3, dans lequel ledit réseau sans tampon (100) est un réseau de salve optique synchrone.

5. Procédé selon une des revendications 1 à 4, dans lequel chaque noeud (110) est un noeud sans tampon.

6. Réseau sans tampon (100), comprenant : une pluralité de noeuds (110) ; et une pluralité de liaisons (120) qui interconnectent lesdits noeuds (110), chaque noeud (110) est adapté pour exécuter une stratégie de routage qui dévie un nombre minimum de paquets (140) vers des noeuds défavorables (110') au lieu de noeuds favorables (110") qui sont plus près de leurs noeuds de destination finale (110'''), dans lequel chaque paquet (140) a au maximum deux liaisons favorables (120') vers deux noeuds favorables (110") sur lesquelles il voudrait se déplacer pour parvenir à son noeud de destination finale (110'''), **caractérisé en ce que** lesdits noeuds (110) sont adaptés pour exécuter une stratégie de routage selon toutes les étapes du procédé d'une des revendications précédentes.

7. Réseau sans tampon (100) selon la revendication 6, dans lequel ledit réseau sans tampon (100) est un réseau de salve optique synchrone.

8. Réseau sans tampon (100) selon la revendication 6 ou 7, dans lequel chaque noeud (110) est un noeud sans tampon.

110 (25 NODES SHOWN)

−100

120

110'''

−120

120'
−140'
110'
110''
110''

120''
120'

−110

−120

NODE
−130
−110

120

MINIMUM DEFLECTION
ROUTING ALGORITHM

120

−140        −140
140

−120

FIG. 1

MARK ALL PACKETS UNASSIGNED AND ALL LINKS AVAILABLE ⌐202

⌐200

IS THERE A PACKET NOT YET ASSIGNED TO A LINK ⌐204

NO → STOP ·· 218

YES

IS THERE AN AVAILABLE LINK REQUESTED BY ONLY ONE UNASSIGNED PACKET ⌐206

NO → HAS ONE OF UNASSIGNED PACKETS REQUESTED AT LEAST ONE AVAILABLE LINK ⌐212 → NO

YES

ASSIGN THAT PACKET TO THAT LINK ·· 208

YES

ASSIGN THAT PACKET TO ANYONE OF REQUESTED AVAILABLE LINK(S) ·214

DEFLECT ANY PACKET TO ANY AVAILABLE LINK

216~

MARK THAT PACKET ASSIGNED AND THAT LINK UNAVAILABLE 210

FIG. 2

FAVORABLE LINKS:
a: N,E
b: E
c: S,W

| STEPS | ROUTING | N | E | S | W |
|---|---|---|---|---|---|
|  |  | 1 | 2 | 1 | 1 |
| 206/208/210 | a→N | ∞ | 1 | 1 | 1 |
| 206/208/210 | b→E | ∞ | ∞ | 1 | 1 |
| 206/208/210 | c→S | ∞ | ∞ | ∞ | 0 |

□ CURRENT NODE
○ CUSTOMER DESTINATION NODE

# FIG. 3A (EXAMPLE #1)

FAVORABLE LINKS:
a: N,E
b: S,E
c: N,E

| STEPS | ROUTING | N | E | S | W |
|---|---|---|---|---|---|
|  |  | 2 | 3 | 1 | 0 |
| 206/208/210 | b→S | 2 | 2 | ∞ | 0 |
| 212/214/210 | a→N | ∞ | 1 | ∞ | 0 |
| 206/208/210 | c→E | ∞ | ∞ | ∞ | 0 |

□ CURRENT NODE
○ CUSTOMER DESTINATION NODE

# FIG. 3B (EXAMPLE #2)

FAVORABLE LINKS:
a: N,E
b: E
c: N,E

| STEPS | ROUTING | N | E | S | W |
|---|---|---|---|---|---|
|  |  | 2 | 3 | 0 | 0 |
| 212/214/210 | b→E | 2 | ∞ | 0 | 0 |
| 212/214/210 | a→N | ∞ | ∞ | 0 | 0 |
| 212/216/210 | c→S | ∞ | ∞ | ∞ | 0 |

□ CURRENT NODE
○ CUSTOMER DESTINATION NODE

# FIG. 3C (EXAMPLE #3)

FAVORABLE LINKS:
a: N,E
b: S,E
c: N,E
d: E

| STEPS | ROUTING | N | E | S | W |
|---|---|---|---|---|---|
| | | 2 | 4 | 1 | 0 |
| 206/208/210 | b → S | 2 | 3 | ∞ | 0 |
| 212/214/210 | a → N | ∞ | 2 | ∞ | 0 |
| 212/214/210 | d → E | ∞ | ∞ | ∞ | 0 |
| 212/216/210 | c → W | ∞ | ∞ | ∞ | ∞ |

☐ CURRENT NODE
○ CUSTOMER DESTINATION NODE

## FIG. 3D (EXAMPLE #4)

FAVORABLE LINKS:
a: N,W
b: N
c: S,E
d: S,W

| STEPS | ROUTING | N | E | S | W |
|---|---|---|---|---|---|
| | | 2 | 1 | 2 | 2 |
| 206/208/210 | c → E | 2 | ∞ | 1 | 2 |
| 206/208/210 | d → S | 2 | ∞ | ∞ | 1 |
| 206/208/210 | a → W | 1 | ∞ | ∞ | ∞ |
| 206/208/210 | b → N | ∞ | ∞ | ∞ | ∞ |

☐ CURRENT NODE
○ CUSTOMER DESTINATION NODE

## FIG. 3E (EXAMPLE #5)

FIG. 4

FIG. 5A (EXAMPLE #1)

FAVORABLE LINKS:
a: N,E
b: E
c: S,W

| STEPS | ROUTING | N | E | S | W |
|---|---|---|---|---|---|
| | | 1 | 2 | 1 | 1 |
| 406/408/410 | b→E | 1 | ∞ | 1 | 1 |
| 406/408/410 | a→N | ∞ | ∞ | 1 | 1 |
| 412/414/410 | *c→S | ∞ | ∞ | ∞ | 0 |

* c→W WAS ALSO POSSIBLE

□ CURRENT NODE
○ CUSTOMER DESTINATION NODE

FIG. 5B (EXAMPLE #2)

FAVORABLE LINKS:
a: N,E
b: S,E
c: N,E

| STEPS | ROUTING | N | E | S | W |
|---|---|---|---|---|---|
| | | 2 | 3 | 1 | 0 |
| 412/414/410 | b→S | 2 | 2 | ∞ | 0 |
| 412/414/410 | a→N | ∞ | 1 | ∞ | 0 |
| 406/408/410 | c→E | ∞ | ∞ | ∞ | 0 |

NOTE A AND C COULD HAVE BEEN ROUTED AS a→E, c→N

□ CURRENT NODE
○ CUSTOMER DESTINATION NODE

FIG. 5C (EXAMPLE #3)

FAVORABLE LINKS:
a: N,E
b: E
c: N,E

| STEPS | ROUTING | N | E | S | W |
|---|---|---|---|---|---|
| | | 2 | 3 | 0 | 0 |
| 406/408/410 | b→E | 2 | ∞ | 0 | 0 |
| 412/414/410 | a→N | ∞ | ∞ | 0 | 0 |
| 416 | c→X | ∞ | ∞ | 0 | 0 |
| 410 | c→S | ∞ | ∞ | ∞ | 0 |

NOTE A AND C COULD HAVE BEEN ROUTED DIFFERENTLY

□ CURRENT NODE
○ CUSTOMER DESTINATION NODE

FAVORABLE
LINKS:
a: N,E
b: S,E
c: N,E
d: E

| STEPS | ROUTING | N | E | S | W |
|---|---|---|---|---|---|
| | | 2 | 4 | 1 | 0 |
| 406/408/410 | d→E | 2 | ∞ | 1 | 0 |
| 406/408/410 | a→N | ∞ | ∞ | 1 | 0 |
| 406/408/410 | b→S | ∞ | ∞ | ∞ | 0 |
| 412/416 | c→X | ∞ | ∞ | ∞ | 0 |
| 410 | c→W | ∞ | ∞ | ∞ | ∞ |

☐ CURRENT NODE
○ CUSTOMER DESTINATION NODE

## FIG. 5D (EXAMPLE #4)

FAVORABLE
LINKS:
a: N,W
b: N
c: S,E
d: S,W

| STEPS | ROUTING | N | E | S | W |
|---|---|---|---|---|---|
| | | 2 | 1 | 2 | 2 |
| 406/408/410 | b→N | ∞ | 1 | 2 | 2 |
| 406/408/410 | a→W | ∞ | 1 | 2 | ∞ |
| 406/408/410 | d→S | ∞ | ∞ | 1 | ∞ |
| 406/408/410 | c→E | ∞ | ∞ | ∞ | ∞ |

☐ CURRENT NODE
○ CUSTOMER DESTINATION NODE

## FIG. 5E (EXAMPLE #5)

MARK ALL PACKETS UNASSIGNED AND ALL LINKS AVAILABLE ─602

╱─600

604
IS THERE A NON-EMPTY $S_i$ AND IS $W_i > 0$    NO

608
IS THERE A NON-EMPTY $T_i$ AND IS $W_i <$ SIZE OF $T_i$ AND IS $W_{i+1} > 0$    NO

YES

─606
- ASSIGN A PACKET IN $S_i$ TO LINK $d_i$
- REMOVE THAT PACKET FROM $S_i$
- DECREMENT $W_i$ BY 1

YES

─610
- ASSIGN A PACKET IN $T_i$ TO LINK $d_{i+1}$
- REMOVE THAT PACKET FROM $T_i$
- DECREMENT $W_{i+1}$ BY 1

612
NO    IS THERE A NON-EMPTY $T_i$ AND IS $W_i > 0$

616─ DEFLECT ALL UNASSIGNED PACKET(S) TO AVAILABLE LINK(S)

YES

─614
- ASSIGN A PACKET IN $T_i$ TO LINK $d_i$
- REMOVE THAT PACKET FROM $T_i$
- DECREMENT $W_i$ BY 1

FIG. 6

FIG. 7A

FIG. 7B

FIG. 7C

FIG. 7D

FIG. 7E

FIG. 7F

FIG. 7G